# EUROPEAN PATENT SPECIFICATION

(11) **EP 0 455 127 B1**
(45) Date of publication and mention of the grant of the patent: **21.07.1993**
(21) Application number: 91106622.3
(22) Date of filing: 24.04.1991
(51) Int. Cl.: G01M 1/34

(54) **Balancing device for rotors, in particular for electric motor rotors**
Vorrichtung zum Auswuchten von Rotoren, insbesondere Elektromotorenanker
Dispositif d'équilibrage des rotors, particulièrement des rotors de moteurs électriques

(30) Priority: 04.05.1990 IT 2022090
(43) Date of publication of application: 06.11.1991
(73) Proprietor: BALANCE SYSTEMS S.r.l., I-20124 Milan (IT)
(72) Inventor: Trionfetti, Gianni, I-20041 Agrate Brianza (Milano) (IT)
(74) Representative: Lunati, Vittoriano

(56) References cited:
- DE-A- 2 638 876
- DE-A- 2 908 272
- DE-A- 3 005 423
- DE-B- 1 241 153
- DE-C- 872 300
- GB-A- 1 033 675

## Description

The present invention refers to a balancing device for rotors, in particular for electric motor rotors, defined in the preamble of the accompanying Claim 1.

As it is known, the dynamic balancing of a rotor requires that the compensation of unbalances occurs in two different planes, named balancing planes, which are spaced with one another and transversal to the rotation axis of the same rotor.

Generally the two balancing planes are located in conjuction with the opposite ends of the rotor.

For getting this compensation, in particular in balancing automatic machines, it is generally used one or more milling units suitable for removing the exceeding material quantities precedently measured by proper measure devices.

In particular, for balancing a rotor of an electric motor, the opposite ends of the rotor lamellar pack are milled.

Further for getting mechanically perfect millings, without causing changes or breackages of sheets forming the lamellar pack, it is used the technique of milling in the two balancing planes with a cutting direction and relative progress movement of the mills from the external side towards the centre of the same rotor, for getting that the stresses caused by the same mills are always directed towards the centre of the lamellar pack.

In this manner the stresses are taken up and the breackages of edges of laminae are avoided.

For making these milling operations it is known a device, disclosed in DE-A- 3 005 423 and in DE-A-1 241 153, that uses two different milling machines or units spaced with one another and having the spindles or drive shafts of the mill tools parallel with one another.

During the work phase the spindles are perpendicular to the rotor to be balanced.

In detail, DE-A-3 005 423 discloses two milling units which are both moved in a direction parallel to the rotation axis of the rotor to be balanced, while DE-A-1 241 153 discloses a device where it is the same rotor that can be moved for being milled on both balancing planes.

This device has a high price owing to the presence of two milling machines or units and does not allow a high production rate.

Further it is known another device, described in DE-A-2 638 876, in which a milling unit foresees a sole spindle, on which at least two different milling units, that are named briefly mills in the following, are keyed reciprocally spaced with one another.

In particular the sole spindle supports one or more first mills having a fixed cutting direction, and one or more second mills having a cutting direction opposite to the first mill cutting direction.

Each mill or each homogeneous mill unit is used for milling a rotor end in conjuction with a first balancing plane.

In practice, for being able to mill both ends, at first it is necessary to mill one end of the rotor by the first mills, then to move the spindle towards the other rotor end, and then to move axially the spindle for adjusting the second mills in right position, and finally to invert the rotation direction of the drive motor of the same spindle and to make the milling.

The axial traverse of the spindle for allowing the replacement of mill located on the rotor and the inversion of the rotation direction of the spindle drive motor cause, in adddition to a great wear of remote control switches controlling the motor also time losses and then allow only a limited production rate.

Further above all in the case in which more mills are used in each homogeneous unit, the mill holder has a protruding part having a rather high length and then it can cause no negligible vibrations during the milling and therefore a faulty machining.

In this situation the technical object forming the basis of the present invention is to provide a balancing device for rotors, in particular for electric motor rotors suitable for obviating substantially to the above mentioned drawbacks. The technical object is substantially achieved by a balancing device for rotors, in particular for electric motor rotors, as claimed in Claim 1.

Preferred embodiments of the invention are specified in Claims 2 to 9.

Further particularities and the advantages of the invention will be more clearly understood from the detailed description of the balancing device according to the invention, shown in the annexed drawings, in which:
**Figures 1 and 2** show two front views of the device, corresponding to two different work positions;
**Figure 3** is a lateral view of the device;
**Figures 4 and 5** show a first embodiment of rotation and locking means used in the device;
**Figure 6** is a rear view of the device, shown in partial section;
**Figure 7** is a second embodiment of rotation and locking means, and
**Figure 8** shows in particular a start milling position according to the second embodiment of Figure 7.

Making reference to the above mentioned figures, the balancing device according to the invention is indicated by the number **1**.

It includes two counter-rotating spindles **2** and **3** supporting mills **4** with opposite cutting directions, corresponding to the rotation directions of the spindles. The spindles 2 and 3 are hold by a support **5**, formed by a cylindrical sleeve rotatable around a rotation axis **6** coinciding with the symmetry axis of said sleeve and parallel to spindles 2 and 3. The spindles are eccentric from the rotation axis 6 and angularly displaced with respect to each other about the rotation axis 6.

The support or sleeve 5 is housed within a bearing structure **7**, to which it is joined a sole motor unit **8** for the drive of both spindles. The spindles 2 and 3 are driven in opposite rotation directions by movement transmission means **9**, including, for example, a belt **10** and a spur gearing **11**.

The sleeve 5 is driven in rotation by rotation means **12** suitable for orienting selectively the spindles 2 and 3 into operative positions with respect to a rotor **13** to be balanced.

This last rotor can be moved along its axial direction by means of mounting means **14** substantially realized by a slide, for bringing the balancing planes **13a** in substantially vertical alignment with either of the spindles 2 and 3 in operative positions.

The bearing structure 7 can be moved along a vertical direction, in a relative movement with respect to the mounting means or slide 14, or also fixed in a vertical position, as specified in the following.

A first embodiment, shown in Figure 4, has rotation means 12 that includes at least a linear-type actuator **15**, for example a fluid-dynamic cylinder, whose rod is engaged to a rack element **16** meshing with a toothed gear krown **17** joined to the sleeve 5.

The Figure 4 shows two single-acting fluid-dynamic cylinders moving the sleeve 5 in opposed directions.

Further there is a locking means **18**, shown in Figure 5, suitable for locking the rotation of the sleeve 5 at exact operative positions of the spindles 2 and 3.

The locking means 18 includes a couple of hooking elements **19** rotating around the pins **20**, and held against the sleeve 5 by an elastic force caused by springs **21**. The hooking elements 19 can be snap-joined into locking notches **22** provided into the sleeve 5 in areas suitable for locking this last sleeve in angular positions corresponding to the operative positions of the spindles 2 and 3.

A releasing element **23**, formed by a linear fluid-dynamic actuator, acting selectively onto each hooking element 19, allows its releasing from the relevant locking notch 22.

The just described first embodiment has the bearing structure 7 mobile in vertical direction in relative movement with respect to the slide 14, under the control of known means, for moving the mills 4 in vertical direction 4 and making the cuttings with the required cut depths.

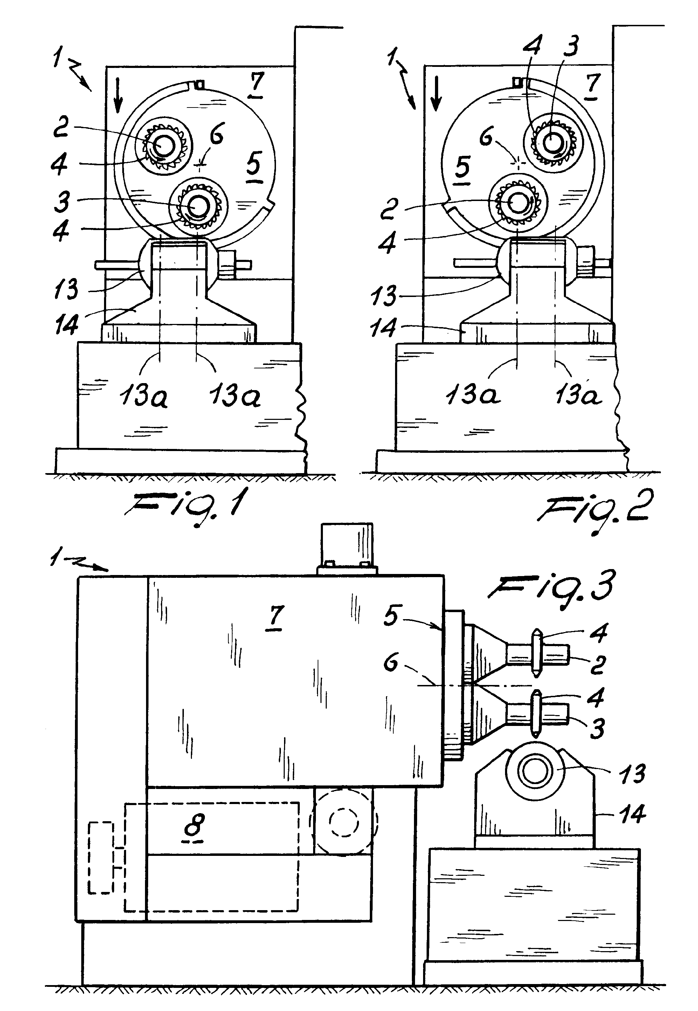

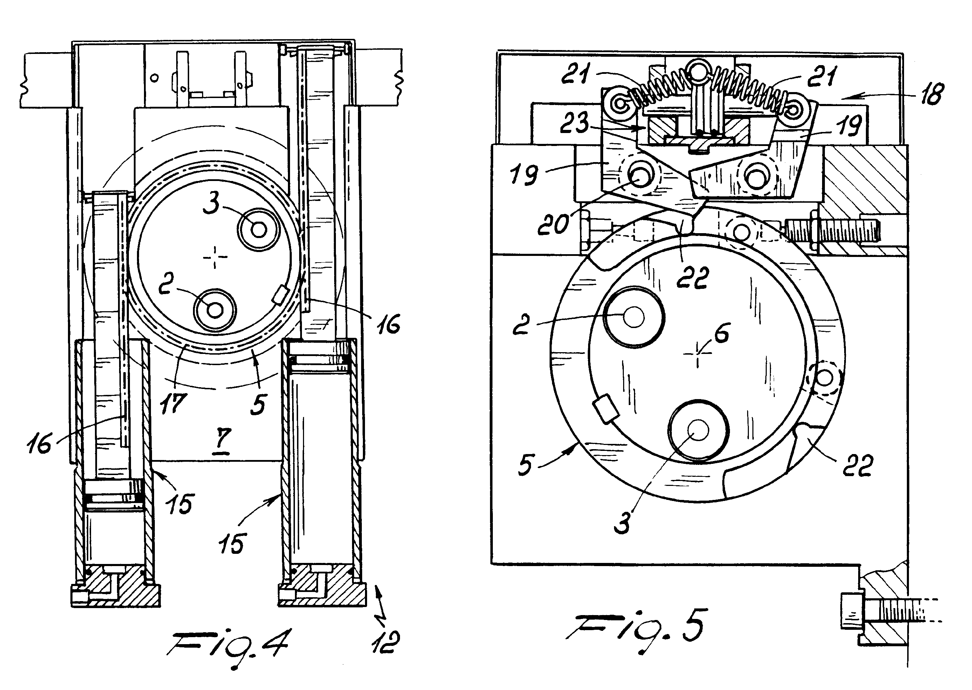

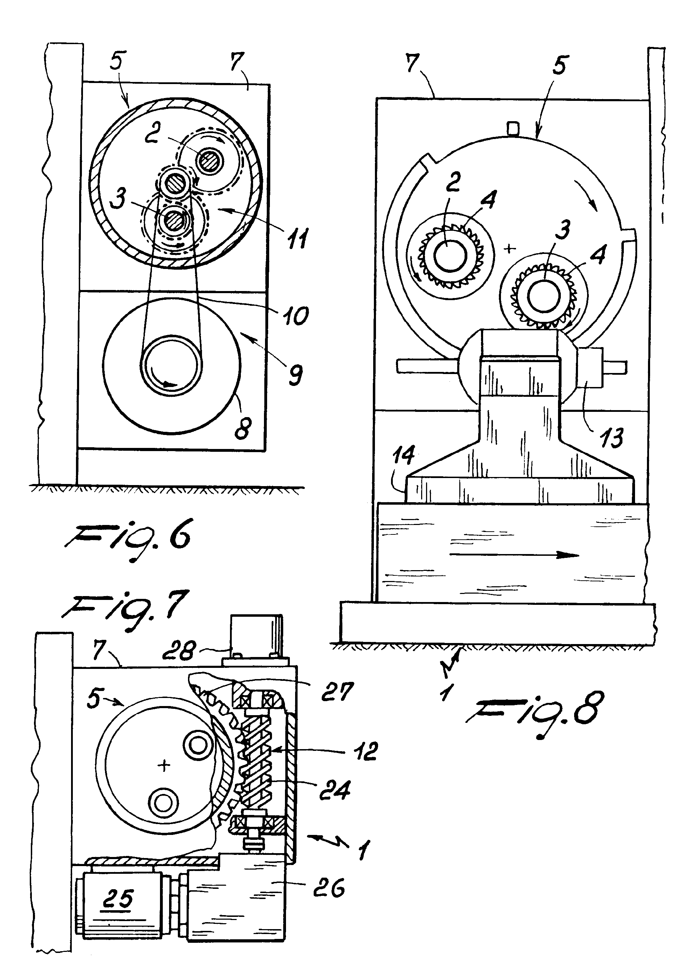

A second embodiment, shown in Figure 7, has rotating means **12** including a worm screw **24**, driven by a drive motor **25** with the meanly connected reduction unit **26**, and a gear **27** joined to the sleeve 5 and operatively meshed with the worm screw 24.

Known control means, not shown in the drawings, allows the same worm screw 24 and sleeve 5 driven by this worm screw to be moved by prefixed rotations corresponding to the angular strokes required for the mills.

The stop of the worm screw 24 in any position establishes also a locking position for the rotation of the sleeve 5, as the worm screw-gear transmission is not reversible.

Finally it is provided a device **28** surveying the angular position of worm screw 24 and rotating sleeve 5.

The bearing structure 7 is fixed in vertical direction, as the same rotation of the sleeve 5 can adjust the position of mills 4 in vertical direction.

The running of the device 1 occurs as follows.

The rotor 13 to be balanced is mounted on the mounting means or slide 14 and this slide is moved for adjusting a balancing plane 13a where the intervention of a mill 4 is foreseen.

Considering the first embodiment of rotation means 12, the mill 4 is moved in operative position by fluid-dynamic cylinders 15 that turn the sleeve 5. Then a hooking element 19 is snap-inserted into the related notch 22 allowing an angular exact positioning of the sleeve 5 and spindles in its operative position.

Then the bearing structure 7 moves vertically for allowing a milling according to the required cut depth.

After having ended the milling, the releasing element 23, pressing against the hooking element 19, causes its output from the locking notch 22 and allows the rotation of the sleeve 5 for bringing the mill or mills of the other spindle to the operative position and carrying out the milling in the other balancing plane 13a.

Considering the second embodiment of rotation means 12, the worm screw 24 allows the operative reciprocating adjusting of spindles 2 and 3 of the relevant mills, but establishing for any position in which it is stopped also a rotation locking position of sleeve 5. Further the worm screw allows the mill to be directly moved in relation to the required cut depth. In fact, as shown in Figure 8, each mill is positioned in an initial operative position angularly displaced with respect to the vertical direction. The following rotation of the worm screw 24 causes a further angular traverse of the mills, in particular of the working mill, that approaching to the radial vertical position is lowered until the calculated cut depth.

Considering the second shown embodiment, the means for the vertical traverse of the bearing structure 7 is not necessary The invention achieves important advantages.

In fact the use of two counter-rotating spindles makes unncessary the inversion operation of the rotation direction and therefore, in addition to the quick mill replacement obtained with circular movements instead of traverse movements, allows to get a high production rate. Further, being unnecessary to have at disposal many mills onto the same spindle, this spindle can have a reduced length and therefore it has very reduced vibration levels and running inaccuracies.

## Claims

1. A balancing device for rotors, in particular for electric motor rotors, including:
- at least two mills (4) having cutting directions opposed to each other, each of said mills (4) being provided for removing an established material quantity from a rotor (13),
- two counter-rotating spindles (2, 3), each spindle (2,3) supporting one of said at least two mills (4) having a cutting direction corresponding to the rotation direction of said spindle (2, 3) on which it is fixed,
- and mounting means (14) for mounting said rotor (13) to be milled by said mills (4), said mills (4) and said mounting means (14) being arranged such that when mounted said rotor (13) is milled at each of its two ends in a balancing plane (13a) perpendicular to the rotor axis by a respective one of said mills (4),
characterized in that it includes:
- a support (5), rotatable about a rotation axis (6) and supporting said spindles (2, 3) parallel to said rotation axis (6) in positions eccentric from said rotation axis (6) and angularly displaced with respect to each other about said rotation axis (6),
- and rotation means (12) for rotating said support (5) about said rotation axis (6) so as to selectively position either of said spindles (2, 3) in operative position with respect to said rotor (13).

2. A balancing device according to Claim 1, wherein said support (5) is formed by a sleeve having a symmetry axis coinciding with said rotation axis (6).

3. A balancing device according to Claim 1, wherein a sole motor unit (8) is provided for driving both said spindles (2, 3) and wherein movement transmission means (9) is provided for turning contemporaneously said two spindles (2, 3) in directions opposed to each other.

4. A balancing device according to Claim 1, wherein said rotation means (12) of said support (5) includes: at least a linear-type actuator (15), a rack element (16) meshed with said linear-type actuator (15), and a toothed krown (17) joined to said support (5) and meshing with said rack element (16).

5. A balancing device according to Claim 1, wherein locking means (18) suitable for locking the rotation of said support (5) at said operative positions of said spindles (2, 3) is provided.

6. A balancing device according to Claim 5, wherein said locking means (18) includes at least one hooking element (19) suitable for snap-locking said support (5).

7. A balancing device according to Claim 6, wherein locking notches (22) machined in said support (5) are provided, and wherein said at least one hooking element (19) can be inserted in said locking notches (22), further a releasing element (23) acting on said hooking element (19) and suitable for releasing said hooking element (19) from said locking notches (22) being provided.

8. A balancing device according to Claim 1, wherein said rotation means (12) includes: a worm screw (24), a gear (27) joined to said support (5) and operatively meshed with said worm screw (24), and a drive motor (25) for said worm screw (24).

9. A balancing device according to Claim 8, wherein control means is provided for said drive motor (25), known and suitable for causing prefixed rotations of said worm screw (24), and wherein a device (28) is provided for surveying the angular position of said worm screw (24) and said support (5).

## Patentansprüche

1. Vorrichtung zum Auswuchten für Rotoren, vor allem für Elektromotorrotoren, mit:
- mindestens zwei Fräsern (4), die einander entgegengesetzte Schnittrichtungen aufweisen, wobei jeder der Fräser (4) vorgesehen ist, um eine geschaffene Materialmenge von einem Rotor (13) zu entfernen,
- zwei gegenläufigen Spindeln (2, 3), wobei jede Spindel (2, 3) einen der mindestens zwei Fräser (4) trägt, der eine Schnittrichtung aufweist, die der Rotationsrichtung der Spindel (2, 3), auf der er befestigt ist, entspricht,
- und mit Befestigungsmitteln (14) zum Anbringen des Rotors (13), der von den Fräsern (4) gefräst werden soll, wobei die Fräser (4) und die Befestigungsmittel (14) so angeordnet sind, daß der Rotor, wenn er angebracht ist, an jedem seiner beiden Enden in einer Ausgleichsebene (13a), die senkrecht zu der Rotorachse verläuft, von jeweils einem der Fräser (4) gefräst wird,
**dadurch gekennzeichnet**, daß sie folgendes umfaßt:
- einen Träger (5), der um eine Drehachse (6) drehbar ist und die Spindeln (2, 3) parallel zu der Drehachse (6) in Positionen abstützt, die außermittig von der Drehachse (6) liegen und im Hinblick aufeinander winkelförmig um die Drehachse (6) verschoben sind,
- und Rotationsmittel (12) zum Drehen des Trägers (5) um die Drehachse (6), um so selektiv jede der Spindeln (2, 3) in die Betriebsposition im Hinblick auf den Rotor (13) zu positionieren.

2. Vorrichtung zum auswuchten nach Anspruch 1, bei der der Träger (5) von einer Muffe gebildet wird, die eine Symmetrieachse aufweist, die mit der Drehachse (6) zusammenfällt.

3. Vorrichtung zum Auswuchten nach Anspruch 1, bei der eine einzige Motoreinheit (8) zum Antreiben beider Spindeln (2, 3) vorgesehen ist, und bei der ein Bewegungsübertragungsmittel (9) vorgesehen ist, um die beiden Spindeln (2, 3) gleichzeitig in einander entgegengesetzten Richtungen zu drehen.

4. Vorrichtung zum Auswuchten nach Anspruch 1, bei der das Rotationsmittel (12) des Trägers (5) folgendes umfaßt: zumindest ein Stellglied (15) des Lineartyps, ein Zahnradelement (16), das mit dem Stellglied (15) des Lineartyps ineinandergreift, und einen Zahnkranz (17), der mit dem Träger (5) verbunden ist und mit dem Zahnradelement (16) in Eingriff steht.

5. Vorrichtung zum Auswuchten nach Anspruch 1, bei der ein Feststellmittel (18) vorgesehen ist, das zum Sperren der Rotation des Trägers (5) in den Betriebspositionen der Spindeln (2, 3) geeignet ist.

6. Vorrichtung zum Auswuchten nach Anspruch 5, bei der das Feststellmittel (18) zumindest ein Einrastelement (19) umfaßt, das für eine Rastverriegelung des Trägers (5) geeignet ist.

7. Vorrichtung zum Auswuchten nach Anspruch 6, bei der Riegelnuten (22), die spanabhebend in den Träger (5) eingearbeitet sind, vorgesehen sind, und bei der das zumindest eine Einrastelement (19) in die Riegelnuten (22) eingeführt werden kann, und bei der desweiteren ein Auslöseelement (23) vorgesehen ist, das auf das Einrastelement (19) einwirkt und geeignet ist, das Einrastelement (19) aus den Riegelnuten (22) zu lösen.

8. Vorrichtung zum Auswuchten nach Anspruch 1, bei der das Rotationsmittel (12) folgendes umfaßt: eine Schneckenschraube (24), ein Zahnrad (27), das mit dem Träger (5) verbunden ist und mit der Schneckenschraube (24) betriebsmäßig in Eingriff steht, und einen Antriebsmotor (25) für die Schneckenschraube (24).

9. Vorrichtung zum Auswuchten nach Anspruch 8, bei der ein bekanntes Steuermittel für den Antriebsmotor vorgesehen ist, das vorausgehende Rotationen der Schneckenschraube (24) bewirken kann, und bei der eine Einrichtung (28) zum Vermessen der Winkelposition der Schneckenschraube (24) und des Trägers (5) vorgesehen ist.

## Revendications

1. Dispositif d'équilibrage pour rotors, en particulier pour rotors de moteurs électriques, comprenant :
- au moins deux fraises (4) dont les directions de coupe sont opposées, chacune desdites fraises (4) ayant pour fonction d'enlever une quantité de matériau déterminée d'un rotor (13),
- deux broches à rotation antagoniste (2, 3), chaque broche (2, 3) supportant l'une desdites au moins deux fraises (4) dont la direction de coupe correspond au sens de rotation de ladite broche (2, 3) sur laquelle elle est fixée,
- et un moyen de montage (14) pour fixer ledit rotor (13) destiné à être fraisé par lesdites fraises (4), lesdites fraises (4) et ledit moyen de montage (14) étant agencés de manière qu'une fois fixé, ledit rotor (13) soit fraisé à chacune de ses deux extrémités dans un plan d'équilibrage (13a) perpendiculaire à l'axe du rotor par une fraise (4) respective,
caractérisé en ce qu'il comprend :
- un support (5), pouvant être tourné autour d'un axe de rotation (6) et supportant lesdites broches (2, 3) parallèlement audit axe de rotation (6) en des positions excentrées relativement audit axe de rotation (6) et angulairement déplacées l'une par rapport à l'autre autour dudit axe de rotation (6),
- et un moyen de rotation (12) pour faire tourner ledit support (5) autour dudit axe de rotation (6) de manière à positionner sélectivement l'une desdites broches (2, 3) dans une position de fonctionnement relativement audit rotor (13).

2. Dispositif d'équilibrage selon la revendication 1, dans lequel ledit support (5) est formé par un manchon dont l'axe de symétrie coïncide avec ledit axe de rotation (6).

3. Dispositif d'équilibrage selon la revendication 1, dans lequel un seul moteur (8) est utilisé pour entraîner lesdites deux broches (2, 3) et dans lequel un moyen de transmission de mouvement (9) a pour fonction de faire tourner en même temps lesdites deux broches (2, 3) dans des directions opposées.

4. Dispositif d'équilibrage selon la revendication 1, dans lequel ledit moyen de rotation (12) dudit support (5) comprend : au moins un dispositif d'actionnement de type linéaire (15), un élément à crémaillère (16) s'engrenant avec ledit dispositif d'actionnement de type linéaire (15), et une couronne dentée (17) reliée audit support (5) et s'engrenant avec ledit élément à crémaillère (16).

5. Dispositif d'équilibrage selon la revendication 1, dans lequel un moyen de verrouillage (18) adapté à verrouiller la rotation dudit support (5) auxdites positions de fonctionnement desdites broches (2, 3) est prévu.

6. Dispositif d'équilibrage selon la revendication 5, dans lequel ledit moyen de verrouillage (18) comprend au moins un élément de crochetage (19) adapté à verrouiller par encliquetage ledit support (5).

7. Dispositif d'équilibrage selon la revendication 6, dans lequel des encoches de verrouillage (22) sont réalisées par usinage dans ledit support (5), et dans lequel au moins un élément de crochetage (19) peut être inséré dans lesdites encoches de verrouillage (22), un élément de libération (23) agissant sur ledit élément de crochetage (19) et adapté à libérer ledit élément de crochetage (19) desdites encoches de verrouillage (22) étant prévu.

8. Dispositif d'équilibrage selon la revendication 1, dans lequel ledit moyen de rotation (12) comprend : une vis sans fin (24), une roue dentée (27) reliée audit support (5) et fonctionnellement engrenée avec ladite vis sans fin (24), et un moteur d'entraînement (25) pour ladite vis sans fin (24).

9. Dispositif d'équilibrage selon la revendication 8, dans lequel un moyen de commande est prévu pour ledit moteur d'entraînement (25), connu et approprié pour entraîner des rotations préfixées de ladite vis sans fin (24), et dans lequel un dispositif (28) est utilisé pour contrôler la position angulaire de ladite vis sans fin (24) et dudit support (5).
